# EUROPÄISCHE PATENTSCHRIFT

(11) **EP 2 285 208 B1**
(45) Veröffentlichungstag und Bekanntmachung des Hinweises auf die Patenterteilung: **21.03.2012**
(21) Anmeldenummer: 10718584.5
(22) Anmeldetag: 06.05.2010
(51) Int. Cl.: A01G 17/08, H01B 13/012

(54) **PORTABLE BINDEMASCHINE**
PORTABLE BINDING MACHINE
MACHINE A LIGATURER PORTABLE

(30) Priorität: 06.05.2009 DE 102009002833
(43) Veröffentlichungstag der Anmeldung: 23.02.2011
(73) Patentinhaber: Qimas E.U., 8082 Kirchbach in Steiermark (AT)
(72) Erfinder: HAAS, Alfred, 8020 Graz (AT)
(74) Vertreter: Hassa, Oliver Michael
(86) Internationale Anmeldenummer: PCT/EP2010/056183
(87) Internationale Veröffentlichungsnummer: WO 2010/128103

(56) Entgegenhaltungen:
- FR-A1- 2 780 702
- US-A- 4 558 894

## Beschreibung

Die vorliegende Erfindung betrifft eine portable und kompakte Bindemaschine zur automatischen Erzeugung von Umwindungen um ein Bindegut durch ein Bindematerial und dergleichen mit anschließender Verknotung.

Die Anwendungen dieses vorzugsweise pistolenartig mit einem abgewinkelten Handgriff-Gehäuse konzipierten Aggregates sind vielfältig. Die portable Bindemaschine eignet sich für die Pflanzenzucht in den Bereichen des Wein- und Gartenbaus, der Hopfen-, Obst- und Gemüsezucht, der Försterei, als auch für industrielle Anwendungsbereiche wie beispielsweise der Verpackungsindustrie oder in den Bereichen des Baugewerbes zum Binden von Eisenmatten gleichermaßen. Besondere Anwendung findet die portable Bindemaschine in der Wein- und Hopfenkultivierung, vorwiegend zum Umwinden und Anbinden von Kulturgehölzen wie beispielsweise Reben und dergleichen Bindegüter.

Primäres Ziel der vorliegenden Erfindung ist es, ein portables, kompaktes, einhändig zu bedienendes sowie zum Einsatz von umweltschonenden Bindematerialien gut geeignetes Werkzeug zum automatisierten und zeitsparenden Umwinden, Binden und Verknoten von Bindegütern bereitzustellen.

Anstelle der traditionellen Form des Bindens von Hand sind mechanische Befestigungsaggregate, insbesondere so genannte Knoten- bzw. Bindezangen als solche allgemein bekannt. Gegenwärtige Knoten- und Bindezangen erlauben durch Befestigungsmittel wie beispielsweise Kabelbinder mit Rasterzähnen und Ratschen, Knotenbinder mit Verdickungsstellen, Fixierungsclips, Klebebänder sowie Klebeschlaufen eine rasche Durchführung von Fixierungsarbeiten, insbesondere bei botanischen Anwendungen. Die Bindematerialien bestehen hier entweder zur Gänze aus Kunststoff oder aus Kunststoff- bzw. Papier- oder Drahtgemisch.

Als Alternative werden Plastikbänder, Papierstreifen oder dergleichen nach Umschlingen des Bindeguts mit Metallklammern (Tacker, Heftmaschine) verbunden. Hierfür gibt es einige wenige Werkzeuge, die sowohl das Umschlingen und Tackern, als auch das Abschneiden durchführen. Anstelle der Metallklammern werden bisweilen auch Bindematerialien mit einem Klebestreifen oder Klettverschlüsse zur Fixierung verwendet.

Nachteilig an obigen Werkzeugen und Systemen ist die Verwendung von umweltproblematischen und zum Teil gesundheitsschädlichen Bindematerialien (Metall, Kunststoff, Abfälle), welche nicht nur zum Teil eine schwierige Handhabung (Verletzungsgefahr, häufiges Nachfüllen mit Bindematerial, Klammern, teilweise beide Hände zur Verarbeitung) als auch einen relativ langen Bindevorgang sowie einen hohen Verschmutzungsgrad aufweisen. Dies hat zur Folge, dass speziell in der Anwendung zum Umwinden und Anbinden von Reben und dergleichen Bindegüter die Absonderung (Verschmutzungsgrad durch Metall) des verwendeten Bindematerials von den Pflanzen aufgenommen wird und bei Verarbeitung dieser zu Lebensmittel durch eine erhöhte Konzentration auch eine Gesundheitsschädigung im Konsum zur Folge haben kann (Metallablagerung im Wein).

In diesem Zusammenhang sind einige Werkzeuge und Aggregate bekannt (z.B. Join Master, Beli Rebenbindegerät, Max Tapener Heftzange, Max Bindezange, Pellenc Tying Machine AP25, HRF Binder, Prothec Tyer oder TYUMUP Zange).

Diese Systeme und Maschinen unterscheiden sich wesentlich von der vorliegenden Erfindung, dadurch gekennzeichnet, dass sie ein grundlegend anderes System aufweisen (Führungstunnel), das Bindegut in der Regel nur einmal umwinden, das Bindematerial mit Metallklammern oder ähnlichem zusammenheften oder durch Verwendung von Bindegut aus Draht mittels Verdrillung der Enden fixieren.

Die US 3,563,583 offenbart eine Knotenbindemaschine, welche vorwiegend für die Anknotung von Führungs- und Kletterschnüren für Hopfenreben an Drahtseilen angewendet wird. Hierbei wird eine inwandig offene Führungsbahn um einen Draht, die diesen zweimal umschlingt, gezeigt. Der zweite Schlingenvorgang umschlingt die erste Schlinge und endet mit dem Durchgang durch die zweite Schlinge. Die Schlingenführung ist an den Kreuzungspunkten so unterbrochen, dass sich der Knoten zusammenziehen lässt. Zudem ist ein Öffnungsmechanismus zur Entnahme des Knoten aus der Schlingenführungsbahn vorgesehen. Gegenläufige Führungsrollen treiben die Schnüre durch die Führungsbahn. Auch wird die Verwendung von Luft für pneumatische Antriebe und zur Führungsunterstützung durch Strömung zur Reibungsminimierung beschrieben. Ventile dienen zur Steuerung der Luftzufuhr. Die Art dieses Knotens fixiert sich durch Zug, also durch die Last der Hopfenschnur.

Aus der FR 2780702 A1 ist eine portable Bindemaschine zur Herstellung zumindest einer Umwindung aus einem Bindematerial von einer Schnur mit anschließender Verknotung der zumindest einen Umwindung durch Umschlingen der zumindest einen Umwindung mit dem Bindematerial offenbart. Die portable Bindemaschine umfasst dabei einen Grundkörper, welcher eine transversale Einschnürung aufweist, die wiederum eine Öffnung aufweist. Ebenso umfasst die portable Bindemaschine wenigstens eine Umwindungsvorrichtung, enthaltend zumindest ein offenes kreisförmiges Element, welches an dem Grundkörper über der transversalen Einschnürung verdrehbar angebracht ist, zumindest ein Klemmmittel zur Klemmung des Bindematerials, wobei das zumindest eine Klemmmittel auf dem offenen kreisförmigen Element angebracht ist und zumindest einen Wickelkopf.

Aus der US 4,558,894 A ist eine portable Bindemaschine zum Binden eines Bündels von Leitungen bekannt geworden. Die Bindemaschine umfasst ein Gehäuse, an dem eine Vorratspule für einen Faden sowie ein um das Leitungsbündel drehbarer Greifer mit einer hufeisenförmigen Führung zum Führen des Pfades um das Leitungsbündel angeordnet sind und das eine Schleifenbildungseinrichtung mit einer in der Führung des Greifers beweglichen Zungennadel zur Umschlingung des Bündels mit dem Faden aufweist. Weiter ist ein Schneidmesser vorhanden, das in gleicher Arbeitsrichtung wie die Zungennadel um die Längsachse verschieb- und verschwenkbar geführt wird, wobei dem Schneidmesser eine Fangnadel zum Festhalten des Fadens beim Abschneiden durch das Schneidmesser zugeordnet ist.

Die Patenschrift GB 807613 beschreibt eine Weberknoten-Knüpfvorrichtung, welche das Verknüpfen zweier Bindematerial-Enden automatisiert. Dazu wird durch Fädelhilfen eine offene Schlaufe mit einer geschlossenen Schlaufe durch Erzeugung einer Luftmasche verknüpft. Durch die Kappe des Rückholpfades der Luftmasche entsteht ein fertiger Verbindungsknoten. Nachteilig ist hier, dass bei diesem Vorgang Abfallstücke und Verschnitt anfällt. Grundsätzlich kann diese Vorrichtung auch zum Verknoten zweier Enden einer Schlinge angewendet werden. Dazu müsste eine weitere Vorrichtung zur Umwindung eines Bindegutes vorhanden sein, um dann die Enden nach erfolgtem Umwinden mit solcher Vorrichtung zu verknoten. Ein Aufnahmeraum für Bindegut ist nicht vorgesehen.

Die Patentschrift AT 413624 B1 und die WO 2006 021016 A1 offenbaren jeweils eine portable Knotenzange, welche im Wesentlichen aus einem rohrförmigen Führungstunnel besteht, durch welchen das Bindematerial, elektrisch oder pneumatisch angetrieben, geleitet wird. Durch eine Kombination von Freigabeeinrichtungen in Form von Längsschlitzen in der Tunnelwand, verschiebbare Tunnelabschnitte, sowie voneinander lösbare Teilschalen wird die Freigabe des Bindematerials als auch des Bindeguts ermöglicht. Nachteilig an dieser Lösung ist, dass der rohrförmige Führungstunnel durch die verschiebbaren Tunnelabschnitte sowie die voneinander lösbaren Teilschalen jedoch durch das ständige Öffnen und Schließen sehr stark beansprucht werden kann. Durch die Beanspruchung kann eine Fehljustierung (nicht ordnungsgemäße Bindegutführung) und eine daraus resultierende Fehlfunktion, als auch ein Defekt der Öffnungsvorrichtung hervorgerufen werden, wodurch eine erhebliche Verletzungsgefahr (Einklemmen) für den Benutzer möglich werden kann. Des Weiteren ist an oben genannter Erfindung nachteilig anzusehen, dass diese, um einen ordnungsgemäßen Binde-/Verknotungsvorgang zu vollenden, das Bindegut mittels Öffnen und Schließen der Teilschalen vollständig umschließen muss, welches in der Anwendung durch das Einfädeln des Bindeguts (in die Bindegut-Durchführungsöffnung) eine zeitliche Einschränkung sowie eine Beschädigung des Bindeguts darstellen kann.

Die US 5,778,946 beschreibt eine pistolenartige Vorrichtung zum Binden, beispielsweise von Weinstöcken. Ein fadenförmiges Band zum Binden wird durch eine Vortriebseinrichtung, durch eine Schneideeinrichtung, und eine erste Öffnung einer Umschlingungseinrichtung in eine hakenförmige, verschwenkbare Führung eingefädelt. Die Führung ist um einen Raum für Bindegut verschwenkbar, wobei der in ihr geführte Faden mittels der Vortriebseinrichtung durch eine zweite Öffnung der Umschlingungseinrichtung vorgeschoben wird. Dann wird der Faden von der Schneideeinrichtung getrennt und seine beiden in den Öffnungen der Umschlingungseinrichtung befindlichen Enden von der Umschlingungseinrichtung verdrillt. Als nachteilig wird hierbei angesehen, dass es durch den durch die Führung geschobenen Faden zu Vortriebsstörungen kommen kann, insbesondere bei weichem Fadenmaterial. Außerdem ist nur eine Umwindung des Bindeguts möglich.

Die US 1,909,300 beschreibt eine Bindemaschine mit zwei Handgriffen, von denen einer mit einem verschwenkbaren, sichelartigen Arm gekoppelt ist. Der sichelartige Arm weist ein Mittel zur Führung eines Bindefadens auf, welcher durch den betätigenden Handgriff zugeführt wird. Der Bindefaden tritt aus dem freien Ende des sichelartigen Arms aus und ist in einer Klemm- und Verknotungseinrichtung an einer Verlängerung des anderen Handgriffs aufgenommen. Der Bindefaden überdeckt einen Raum für Bindegut. Das Bindegut wird in diesen Raum eingebracht, wobei es den Bindefaden bis zum Aufliegen auf einem Anschlag mitnimmt. Dabei wird der Bindefaden durch den sichelartigen Arm weiter herausgezogen. Dann wird der sichelartige Arm durch Betätigung des zugehörigen Handgriffs über das Bindegut in Richtung auf die Klemm- und Verknotungseinrichtung verschwenkt, wobei der Bindefaden, welcher sich unter dem Bindegut befindet, um dieses außen weiter herumgeführt und in der Klemm- und Verknotungseinrichtung aufgenommen und verknotet und abgeschnitten. Die voluminöse und somit schwere Gestalt der Bindemaschine sowie ihre Betätigung werden als nachteilig angesehen. Es ist weiterhin nur eine Umwindung des Bindeguts möglich.

Die Patentschrift EP 0120948 B1 offenbart eine pistolenartige Bindemaschine, welche im Wesentlichen aus einer rotationsfähigen Scheibe aufweisend eine Klemmvorrichtung und einen Bindegutraum, einem Grundkörper, welcher innerhalb der rotationsfähigen Scheibe starr angeordnet ist, welcher eine rotationsfähige sowie vertikal verschiebbare Wickelvorrichtung, zwei vertikal verschiebbare Bolzen sowie einen Bindegutraum aufweist, einem Schweiß-Balken und einer Abtrennvorrichtung besteht. Über eine Bindematerialzufuhrvorrichtung in Form einer Spule mit Antrieb und zwei Antriebsrädern wird das Bindematerial über einen Führungstunnel zur Klemmvorrichtung transportiert. Die sichelartige Scheibe beginnt mit einer Rotation, wobei gleichzeitig die zwei Bolzen, sowie der Wickelkopf nach links ausgefahren werden, um das Bindegut zuerst 1 ½ mal mit dem Bindematerial zu umrunden. Im Anschluß wird das Bindematerial mithilfe des Wickelkopfes zuerst linksseitig, dann bei weiterführen der zweiten Umrundung rechtsseitig an den Umwindungen vorbeigeführt. Nach erfolgter Rotation des Wickelkopfes wird das Bindematerial nochmals an einer Seite vorbeigeführt und der Wickelkopf eingefahren, um das Bindematerial freizugeben. Anschließend werden die Bolzen nacheinander eingefahren um den Knoten zu bilden. Die Verzurrung des Knotens erfolgt durch das Rückziehen des Bindematerials mithilfe der angetriebenen Rolle und Räder. Die Fixierung des Knotens erfolgt mit einem Schweiß-Balken, welcher das mit einem Klebstoff überzogene Bindematerial (den geformten Knoten) an das Bindegut andrückt und thermisch erhitzt, um es zu verschweißen. Nach Abkühlung des Bindematerials wird dieses über die Abtrennvorrichtung durchtrennt und das Bindegut freigegeben. Nachteilig ist, dass das Bindegut zur Verknotung mindestens zweimal umrundet werden muss, wobei hierfür mehrere und komplexe Bauteile nötig sind, um den Knoten zu bilden. Einwesentlicher Nachteil ist auch aufgrund der Bindematerialzufuhrvorrichtung gegeben, da das Bindematerial zum Weitertransport durch die Antriebsräder einer ständigen Quetschung unterliegt, welches einen starken Materialabrieb sowie eine daraus resultierende starke Verschmutzung zur Folge hat. Nachteilig ist weiter auch das Verschweißen, welches durch Andrücken des Schweißbalkens an den Knoten und somit an das Bindegut erfolgt. Durch die starke Erhitzung beim Verschweißen sowie die danach nötige Abkühlung besteht die Gefahr das Bindegut, als auch das Bindematerial zu beschädigen. Nachteilig ist weiter auch die Verwendung von Bindematerial, welches mit einem Klebstoff oder Dergleichen überzogen ist, da dies zum einen mögliche Arten von Bindematerial einschränkt, zum anderen auch die Herstellung des Bindematerials verteuert.

Die Patentschrift US 6,648,378 offenbart ein pistolenartiges Bindegerät aufweisend mehrere zusammengefügte sichelartige Scheiben sowie einen verschiebbaren Transportschlitten mit einer Klemmvorrichtung und einer Abtrennvorrichtung, welcher auf den sichelartigen Scheiben angeordnet ist, sowie eine auf der sichelartigen Scheibe angebrachte Führungshilfe für Bindematerial.

Die Patentschrift US 6,279,970 offenbart ein Bindegerät, welches im Wesentlichen zwei rotationsfähige sichelartige Scheiben, eine Klemmvorrichtung sowie mehrere teilweise verschiebbare Hacken und Pins zur Knotenbildung umfasst.

Nachteilig an den in den Patentschriften US 6,648,378 und US 6,279,970 offenbarten Lösungen ist, dass für eine Knotenbildung eines Bindematerials mehrere und komplexe Bauteile nötig sind und dass das Bindegut mit Bindematerial mehrmals umwunden wird. Die Knotenbildung erfolgt in mehreren Schritten durch seitliches Vorbeiführen respektive Kreuzen des Bindematerials an den Umwindungen.

Vor diesem Hintergrund liegt der vorliegenden Erfindung die Aufgabe zu Grunde, ein möglichst Umwelt und Pflanzen schonendes, in der Handhabung einfacheres und sicheres sowie in der Funktionsweise stabiles portables Werkzeug zur ein- bis mehrfach Durchführung eines Endes durch eine oder mehrere Schlingen bereitzustellen.

Erfindungsgemäß wird zumindest eine der genannten Aufgaben durch eine Bindemaschine mit den Merkmalen des Patentanspruchs 1 gelöst.

### Demgemäß ist vorgesehen:

Eine portable Bindemaschine zur Herstellung zumindest einer Umwindung aus einem Bindematerial von Bindegut mit anschließender Verknotung der zumindest einen Umwindung durch Umschlingen der zumindest einen Umwindung mit dem Bindematerial, mit einem Grundkörper, welcher einen Bindegutraum aufweist, der eine Bindegutraumöffnung aufweist, mit wenigstens einer Umwindungsvorrichtung, enthaltend: zumindest eine sichelartige Scheibe, welche an dem Grundkörper über dem Bindegutraum verdrehbar angebracht ist, zumindest eine Klemmvorrichtung zur Klemmung des Bindematerials, wobei die zumindest eine Klemmvorrichtung auf der sichelartigen Scheibe angebracht ist und zumindest einen Wickelkopf, der um seine eigene Achse rotierbar ist und der an der sichelartigen Scheibe angeordnet ist.

Der primäre erfindungsgemäße Grundgedanke besteht darin, ein einfaches und vollautomatisches Werkzeug ohne zusätzliches Öffnen oder Schließen von Teilen zur Bedienung mit nur einer Hand bereitzustellen, welches durch die Formgebung und Konzeption hervorragend für den Einsatz umweltschonender Bindematerialien geeignet ist.

Das Umwinden und Fixieren von Bindegut, im speziellen Pflanzentriebe an Führungshilfen in den Bereichen des Wein-und Gartenbaus, der Hopfen-, Obst- und Gemüsezucht sowie der Försterei, die Bündelung mehrerer länglicher bis sehr langer Gegenstände mit Bindematerialien wie Schnüre, Garne und dergleichen, wird durch die vorliegende Erfindung in Form eines handlichen Aggregates ermöglicht.

Die vorliegende Erfindung ermöglicht in vorteilhafter Weise zudem einen vollautomatischen Binde- und Verknotungsvorgang innerhalb kürzester Zeit (1-2 sec.) mit nur einer Hand ohne zusätzliches Öffnen und Schließen von Teilen des Aggregates, ohne Bindematerial-Führungstunnel sowie ohne zusätzliche Nachbearbeitung der Fixierung oder der Nachladung von Bindematerial.

Im Gegensatz zu bisherigen Lösungen, wie sie zum Beispiel oben ausschnittsweise skizziert wurden, weist die portable Vorrichtung zur Umwindung von Bindegut mit Bindematerial und anschließender Verknotung durch Umschlingen der Umwindungen wenigstens eine sichelartige Scheibe auf, die den Pfad des Bindematerials in Form mindestens einer Umwindung um einen Bindegutraum vorgibt. Wenigstens eine Klemmvorrichtung sowie wenigstens einen um seine eigene Achse rotierbaren Wickelkopf, wobei dieser an der sichelartigen Scheibe angeordnet ist, der wenigstens eine Sekundärwindung anschließt, welche die Primärwindung ganz oder teilweise umschlingt, sind vorgesehen. Die Klemmvorrichtung befindet sich auf der sichelartigen Scheibe und wird so zusammen mit eingeklemmtem Bindematerial kreisförmig um das Bindegut herum geführt. Mithilfe einer Kombination von Zufuhr- und Transporteinrichtungen bestehend, mindestens aus einem Träger- und einer Aufnahmevorrichtung, werden sowohl die Bindegutzufuhr als auch der Weitertransport des Bindematerials gewährleistet.

Eine erhebliche Verbesserung gegenüber bekannten Lösungen ergibt sich durch die erfindungsgemäße portable Bindemaschine auch dadurch, dass die über die Träger- und Aufnahmevorrichtung kontrollierte Zufuhr eines in der Länge uneingeschränkten Bindematerials erfolgt, welche eine permanente Quetschung und einen Abrieb des Bindematerials erheblich reduziert und ebenso unempfindlich gegenüber Verschmutzung, wie bspw. eine Verstopfung eines Zufuhrtunnels für das Bindematerial, ist, wobei die Bindemaschine eine Abtrennvorrichtung, eine Klemmvorrichtung, eine sichelartige Scheibe sowie einen um seine Achse rotierbaren Wickelkopf zur Umwindung von Bindegut und anschließender Verknotung durch Umschlingen der Umwindungen aufweist, wobei der Wickelkopf an der sichelartigen Scheibe angeordnet ist.

Eine wesentliche Verbesserung ist zudem durch die funktionelle Formgebung des Aggregates derart gegeben, dass keine Teile oder Teilabschnitte des Aggregates während der Bindegutzufuhr oder des gesamten Umwindungs- bzw. Binde- und Verknotungsvorganges weder teilweise noch zur Gänze geöffnet werden müssen. Somit gestaltet sich die Bindegutzufuhr bzw. das Einfädeln des Bindeguts durch den ständig geöffneten Bindegutraum sehr einfach und in der Anwendung zeitsparend. Eine Verletzungsgefahr für den Anwender sowie eine eventuelle Beschädigung des Bindeguts durch eventuelles Einklemmen kann somit fast zur Gänze ausgeschlossen werden.

Die funktionelle Konzeption der erfindungsgemäßen Bindemaschine ermöglicht erstmals die Verwendung von rein biologisch abbaubaren Bindematerialien ohne Bindemittel-Führungstunnel.

Der besondere Vorteil der vorliegenden Erfindung gegenüber bekannten Lösungen liegt in der Formgebung einer kompakten und portablen Bindemaschine sowie der Funktion der kontrollierten Bindegutzufuhr über eine Träger- und Aufnahmevorrichtung, in Kombination einer aus nur wenigen Komponenten umfassenden Umwindungsvorrichtung bestehend aus mindestens einer Klemmvorrichtung, mindestens einer Primärwindung durch mindestens eine sichelartige Scheibe sowie mindestens einer Sekundärwindung durch mindestens einen um seine Achse rotierbaren Wickelkopf, wobei dieser an der sichelartigen Scheibe angeordnet ist.

Anwendung findet die gegenständliche Erfindung in vielen Bereichen, wo häufig zeit- und arbeitsintensive Umwindungen mit Verknotung notwendig sind. Als portables und handliches Werkzeug ist die vorliegende Erfindung zum Umwinden, Binden, Verknoten als auch zum Bündeln sowohl im Hobby- und Freizeitbereich, als auch im professionellen und industriellen Einsatz wie beispielsweise in den Bereichen des Wein- und Gartenbaus, der Hopfen-, Obst- und Gemüsezucht sowie der Försterei oder in Bereichen der Verpackungsindustrie oder auch des Baugewerbes beispielsweise zum Binden von Eisenmatten und dergleichen, gleichermaßen geeignet. Die kompakte und stabile Konzeption der vorliegenden Erfindung bildet wesentliche Vorteile in der Verwendung von Bindematerialien. So können unterschiedlichste Bindematerialien aus Papier, Kunststoff oder künstlichen Fasern, aus Gummi, aus Tierhaaren (Wolle), Seide und dergleichen oder natürliche und pflanzliche Materialien (wie z.B. Stroh, Hanf, Kokos und dergleichen) oder Kombinationen daraus in Form von Seilen, Garne, Schnüre, Bänder, Streifen, Fäden, Zwirne, verwendet werden. Bindematerialien aus Metall, Aluminium oder Metall- bzw. Aluminiumeinlagerungen (Drähte und dergleichen) können gleichermaßen gut verwendet werden. Im Speziellen geeignet ist die portable Bindemaschine jedoch zur Verwendung von biologisch abbaubaren Bindematerialien wie beispielsweise Stroh, Hanf, Gräser oder Papierschnüre oder auch Kombinationen daraus, welche durch Witterungseinflüsse (Regen, Schnee, etc.)eine definierte biologische Abbauzeit (Verrottung, Abfallen etc.) aufweisen, wodurch diese beispielsweise beim Ernten von Weinreben nicht mehr zusätzlich geöffnet und entfernt werden müssen.

Die einfache Einhand-Bedienung der erfindungsgemäßen portablen Bindemaschine ermöglicht eine sehr kurze Verarbeitungszeit (1-2 sec.)bei sehr geringem Verletzungsrisiko.

Die erfindungsgemäße portable Bindemaschine weist demnach mindestens eine Träger- und Aufnahmevorrichtung auf, welche das Bindematerial zum kontrollierten Weitertransport an die Umwindungsvorrichtung automatisch weiterleitet. Über die mindestens eine Klemmvorrichtung sowie die mindestens eine sichelartige Scheibe, wird um die Bindegutraumöffnung in Form einer kreis- oder ellipsenförmigen Bewegung mindestens eine Umwindung, die auch als Primärwindung bezeichnet wird, durchgeführt. Im Anschluss an die Primärwindung wird über mindestens einen um seine eigene Achse rotierbaren Wickelkopf, wobei dieser an der sichelartigen Scheibe angeordnet ist, eine Art Verknotung mittels einer weiteren Windung, als sekundäre Windung bezeichnet, durchgeführt, welche den Primärwindungspfad zumindest in einem Abschnitt ganz oder teilweise umwindet. Mindestens eine Abtrennvorrichtung, welche vorzugsweise direkt an der Träger- und Aufnahmevorrichtung, im Speziellen an der Trägervorrichtung, installiert ist, trennt den Knoten nach Beendigung des Umwinde-und Verknotungsvorganges vom nachfolgend automatisch zugeführten Bindematerial. Die Freigabe des umwundenen bzw. verknoteten Bindeguts erfolgt automatisch im Zuge der erneuten Bindemittelzufuhr durch Lösen der Klemmeinrichtung an der Umwindungsvorrichtung.

Bei einer einfachen Variante der erfindungsgemäßen Bindemaschine kann der um seine Achse rotierbare Wickelkopf mit einer Klemmvorrichtung versehen sein.

Um einen eventuell fehlerhaften Bindemitteltransport im Zuge eines Umwinde- bzw. Binde- und Verknotungsvorganges vorzubeugen, kann nach einer weiteren Variante der erfindungsgemäßen Bindemaschine eine Bindegutführungshilfe vorgesehen sein.

Gemäß einer Variante der erfindungsgemäßen Bindemaschine weist diese an der Trägervorrichtung eine Rückzugsicherung in Form mindestens einer Klemmvorrichtung auf, welche zur Verhinderung einer unbeabsichtigten gegenläufigen Entnahme des Bindematerials dienen kann.

Bei einer weiteren vereinfachten Variante der erfindungsgemäßen Bindemaschine kann die Träger- und Aufnahmevorrichtung aus einem Teil konstruiert sein, sodass sowohl die Bindemittelzufuhr als auch der Weitertransport an die Umwindungsvorrichtung über ein Modul erfolgen kann. Die zur korrekten Bindemittelaufnahme in der Umwindungsvorrichtung nötige Einklemmweglänge (= nötige Länge des Bindematerials zum Festklemmen in der Klemmvorrichtung) des Bindematerials kann bei dieser vereinfachten Variante durch eine, in der einfachsten Form, gefederte Aufnahmehülse bereitgestellt werden. Die Ausführungsart der Aufnahmehülse ist jedoch nicht auf diese eingeschränkt.

Gemäß einer weiteren Variante der erfindungsgemäßen Bindemaschine kann die Träger- und Aufnahmevorrichtung zur Erleichterung der erstmaligen Bindemittelzufuhr Längsschlitze bzw. in Längsrichtung vorgesehen Öffnungen in den Führungshilfen (Hülsen) aufweisen, sodass das Bindemittel nicht eingefädelt, sondern seitlich in die Öffnungen gelegt werden kann.

Nach Varianten der erfindungsgemäßen portablen Bindemaschine kann der automatische Antrieb der einzelnen Komponenten über mindestens eine Übersetzung, vorzugsweise mindestens ein Übersetzungsgetriebe, durchgeführt werden. Die Ausführungsvarianten des Antriebes können sowohl in Form mindestens einer Standardübersetzung durch Zahnräder, als auch in einer komplexeren Ausführung, wie beispielsweise mindestens ein Planetengetriebe, konzipiert werden, sind in der Ausführungsart und der Anzahl jedoch nicht eingeschränkt.

Die einfachste Variante zum Antrieb der einzelnen Komponenten über mindestens eine Übersetzung kann mechanisch, durch einmalig oder mehrmals Zuführen von Kraft, wie beispielsweise das Ausüben von Druck mittels einer Hand auf zwei Hebel (Zangenfunktion, Hebelwirkung) erfolgen.

Bei einer weiteren bevorzugten Ausführung der erfindungsgemäßen portablen Bindemaschine erfolgt der Antrieb der einzelnen Komponenten mit Hilfe von elektronischen Antrieben (Motoren).

Nach weiteren Varianten der erfindungsgemäßen Bindemaschine erfolgt der Antrieb durch die Zufuhr von Druckluft (Pneumatik).

Bei einer weiteren Ausführungsvariante der erfindungsgemäßen Bindemaschine kann der Antrieb mittels Hydraulik erfolgen.

Der Antrieb der einzelnen Komponenten kann bei der erfindungsgemäßen portablen Bindemaschine in einer weiteren Variante auch mittels Verbrennungsmotoren erfolgen.

Die sichelartige Scheibe kann eine Scheibenöffnung aufweisen, deren Öffnungsweite im Wesentlichen einer Öffnungsweite der Bindegutraumöffnung entspricht.

Bei einer weiteren Ausführungsvariante können die sichelartige Scheibe und/oder die Bindegutraumöffnung variabel ausgeführt sein, so dass die Öffnungsweite der Scheibenöffnung und/oder der Bindegutraumöffnung in der Größe veränderbar ist. Die sichelartige Scheibe kann auch zahnradartig und/oder aus zwei zusammengesetzten sichelartigen Scheiben ausgeführt sein, wobei zumindest eine der Scheiben eine Antriebsmöglichkeit, bspw. Zahnräder, aufweist.

Weiterhin können die wenigstens eine Trägervorrichtung und die wenigstens eine Aufnahmevorrichtung gegeneinander verschwenkbar am Grundkörper angeordnet sein, woraus sich ein einfacher Aufbau und eine einfache Abfolge von Ladevorgängen ergeben.

Es ist vorgesehen, dass die wenigstens eine Umwindungsvorrichtung und die Ladevorrichtung gekoppelt sind. Dies kann zum Beispiel über wenigstens einen Auslösehebel erfolgen. Selbstverständlich kann dies auch auf andere Weise erfolgen. Dabei können bspw. die Auslösehebel teilweise oder auch zur Gänze, z. B. durch vollständig elektronische Steuerung der Kopplung, entfallen.

Zur einfachen Zentrierung von Bindegut weist der Bindegutraum eine Zentrierhilfe auf.

Gemäß einer Variante der erfindungsgemäßen Bindemaschine, kann die gesamte Funktion der einzelnen Komponenten und Module über eine teilweise oder auch vollelektronische Steuerung erfolgen.

Eine besondere weitere Variante der erfindungsgemäßen Bindemaschine kann eine teilweise oder vollständig elektronische Überwachung zur Bindemittelzufuhr oder zur Überwachung des Bindegutraums oder zur Überwachung des gesamten Binde-und Verknotungsvorganges oder auch eine Kombination dieser aufweisen.

Nach einer Variante der erfindungsgemäßen Bindemaschine kann diese eine Vorrichtung zur Anzeige einer Fehlfunktion aufweisen. Dies kann sowohl mechanisch (z.B. Sichtfenster) als auch voll elektronisch (z.B. Panel, LED) erfolgen.

Die einzelnen Komponenten der erfindungsgemäßen portablen Bindemaschine können aus Materialien wie beispielsweise Kunststoff, Kohlefaser, Carbon, Gummi, Messing, Metall, Aluminium, Magnesium oder auch Titan und dergleichen oder auch aus Kombinationen daraus gefertigt sein, ist auf diese Materialien jedoch nicht eingeschränkt.

Die obigen Ausgestaltungen und Weiterbildungen der Erfindung lassen sich auch auf beliebige und geeignete Art und Weise miteinander kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: eine Darstellung der erfindungsgemäße portablen Bindemaschine in einer ersten Variante;
- Fig. 2: eine Darstellung einer elektronischen Steuerung in einer ersten Variante;
- Fig. 3A - 3D: eine Darstellung der portablen Bindemaschine in einer ersten Variante mit einzelnen Abläufen zur Durchführung einer Umwindung mit anschließender Verknotung;
- Fig. 4A - 4B: eine Darstellung der portablen Bindemaschine in einer zweiten Variante mit einzelnen Abläufen zur Durchführung einer Umwindung mit anschließender Verknotung;
- Fig. 5A - 5G: Komponenten einer portablen Bindemaschine;
- Fig. 6A - 6E: Komponenten einer portablen Bindemaschine;
- Fig. 7A - 7C: Komponenten einer Klemmvorrichtung; und
- Fig. 8: einen Antrieb in einer ersten Variante; und
- Fig. 9A - 9B: Beispiele für mögliche Knotengrundformen.

In den Figuren der Zeichnung sind gleiche und funktionsgleiche Elemente und Merkmale - sofern nichts Anderes ausgeführt ist - mit denselben Bezugszeichen versehen.

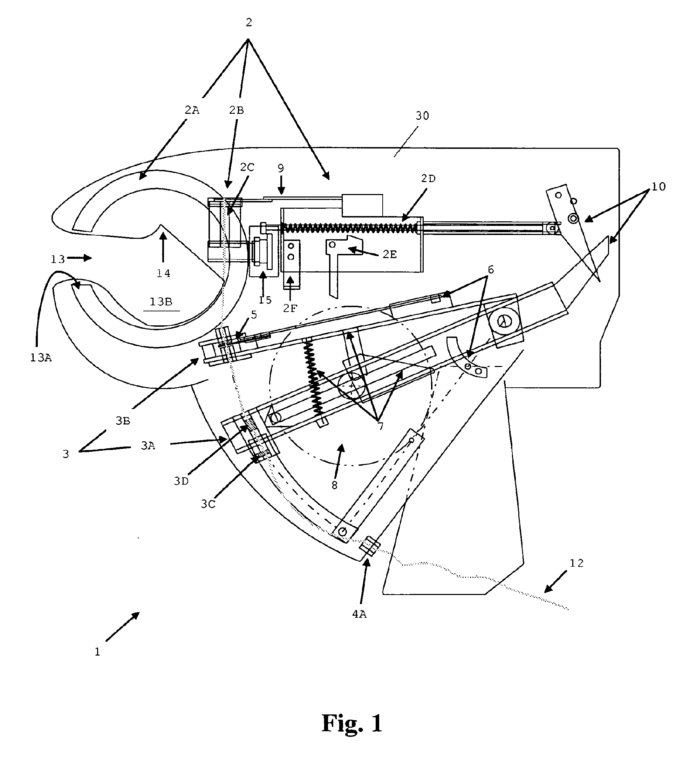

Die Figur 1 zeigt eine Darstellung einer portablen Bindemaschine 1 mit einem Grundkörper 30 in einer ersten Ausführung.

Im Falle des vorliegenden Ausführungsbeispiels bilden die Umwindungsvorrichtung 2, bestehend aus einer sichelartigen Scheibe 2A sowie einem um seine eigene Achse rotierbaren Wickelkopf 2B mit einer Klemmvorrichtung 2C und einer Ladevorrichtung 3, bestehend aus einer Trägervorrichtung 3A und einer Aufnahmevorrichtung 3B, die Grundelemente der portablen Bindemaschine 1.

Der um seine eigene Achse rotierbare Wickelkopf 2B ist direkt an der sichelartigen Scheibe 2A befestigt und weist eine Klemmvorrichtung 2C auf, welche über einen Klemm- und Öffnungsmechanismus 2D, 2E automatisch betätigt wird.

Die Klemmvorrichtung 2C kann auch separat an der sichelartigen Scheibe 2A ausgeführt sein.

Aus Gründen der Übersichtlichkeit ist nicht jedes einzelne Element eines Elementtyps mit einem Bezugszeichen versehen. Repräsentativ ist jeweils zumindest ein Element des jeweiligen Elementtyps mit einem Bezugszeichen versehen und die Erläuterungen dieses Elementes gelten für die anderen Elemente desselben Typs analog.

Die sichelartige Scheibe 2A ist hier drehbar um einen Bindegutraum 13B an dem Grundkörper 30 angeordnet, wobei ihre Drehachse senkrecht auf der Zeichnungsebene steht. Die sichelartige Scheibe 2A ist hier ringförmig mit einer Scheibenöffnung 13A ausgebildet. Die Scheibenöffnung 13A besitzt eine Öffnungsweite, welche im Wesentlichen einer Öffnungsweite einer Bindegutraumöffnung 13 entspricht.

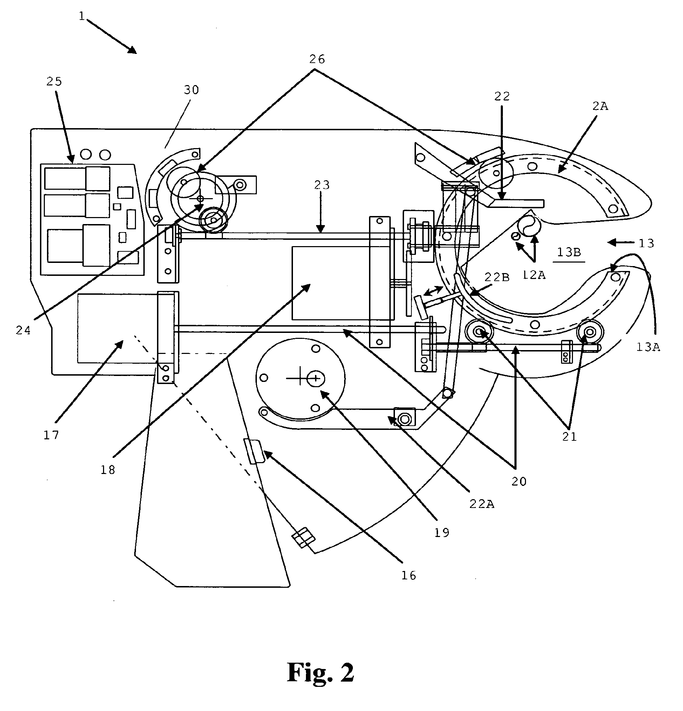

Der Bindegutraum 13B dient zur Aufnahme eines Bindeguts 12A (siehe Figur 2), welches durch die Bindegutraumöffnung 13 in den Bindegutraum 13B einführbar und mit einer Zentrierhilfe 14 zentrierbar ist.

Die Betätigung der Klemmvorrichtung 2C erfolgt über einen Klemm- und Öffnungsmechanismus 2D, 2E, welcher über Übersetzungshebel 10 ausgelöst wird.

Bei einer weiteren, in den Figuren nicht näher ausgeführten Variante, kann der Klemm- und Öffnungsmechanismus 2D, 2E auch an beliebig anderen Stellen ausgeführt sein. Ferner können auch die für das Auslösen des Klemm- und Öffnungsmechanismus 2D, 2E vorgesehenen Auslösehebel 10 an einer beliebig anderen Stelle ausgeführt sein oder auch durch eine in den Figuren nicht näher dargestellte neue Variante (z.B. vollständig elektronische Steuerung mit Magnetkontakt oder ähnliches) ersetzt werden.

Die Trägervorrichtung 3A weist im vorliegenden Beispiel eine Klemmvorrichtung 3C und eine Rückzugsicherung 3D auf. Die Klemmvorrichtung 3C dient als Führungshilfe für das Bindematerial 12 und beugt einem eventuellen Fehler beim Weitertransport des Bindematerials durch Einklemmen vor. Die Rückzugsicherung 3D beugt einer unbeabsichtigten Entnahme des Bindematerials vor.

Eine Abtrennvorrichtung 5, welche über Abtrennauslöser 6 automatisch betätigt wird, ist im vorliegenden Beispiel direkt an der Aufnahmevorrichtung 3B ausgeführt. Die Abtrennvorrichtung 5 kann auch an einer beliebig anderen, in den Figuren nicht näher dargestellten Stelle, angeordnet sein. Die Betätigung der Abtrennvorrichtung 5 kann in einer weiteren, in den Figuren nicht näher dargestellten Variante, auch elektronisch erfolgen.

Ein automatischer Antrieb der Trägervorrichtung 3A erfolgt im vorliegenden Beispiel über eine Antriebskurbel 8.

Als Antriebs- und Führungshilfe für die Aufnahmevorrichtung 3B dienen Führungselemente 7. Je nach Ausführungsvariante können diese jedoch auch teils oder zur Gänze entfallen.

Die Figur 2 zeigt eine Darstellung einer elektronischen Steuerung in einer ersten Variante.

Die Betätigung der portablen Bindemaschine 1 erfolgt über einen Startschalter 16. Nach durchgeführter Betätigung werden über die Steuereinheit 25 zum Antrieb der jeweiligen Komponenten und Vorrichtungen nötige Motoren 17, 18, 19 nach vorgegebenen Kriterien einzeln angesteuert. Über sogenannte Antriebswellen 20, 23, zugehörige Übersetzungen/Getriebe 21, 24 sowie zugehörige Laufräder 26 werden die einzelnen Komponenten und Vorrichtungen bewegt. Ein Unterstützungshebel 22 drückt, ausgelöst über einen Auslösehebel 22A, das Bindegut 12A im Zuge des Verknotungsvorganges zusätzlich zum ausgeübten Druck durch das Bindematerial 12 entlang einer dafür vorgesehenen Gleitschiene der Bindegutraumöffnung 13 nach unten. Nach erfolgter Verknotung kann die Freigabe des Bindeguts 12A mithilfe einer Freigabevorrichtung 22B unterstützt werden. In der dargestellten vorteilhaften Variante ist die Freigabevorrichtung 22B teleskopartig ausfahrbar ausgeführt, welches das Bindegut 12A durch eine lineare Bewegung aus dem Bindegutraum 13B schiebt.

In einer weiteren in den Figuren nicht näher dargestellten Variante, kann die Freigabevorrichtung 22B auch hebelartig ausgeführt sein und das Bindegut 12A in einer kreisförmigen Bewegung aus dem Bindegutraum 13B befördern.

Ferner kann die Freigabevorrichtung 22B auch an einer beliebig anderen Stelle angeordnet werden, oder auch mit dem Unterstützungshebel 22 gekoppelt sein; sie ist jedoch nicht auf diese Ausführungen eingeschränkt.

In einer weiteren, in den Zeichnungen 4A-4B dargestellten Variante, kann die Freigabevorrichtung 22B und/oder der Unterstützungshebel 22 auch zur Gänze entfallen.

Der Unterstützungshebel 22 kann in einer weiteren, in den Zeichnungen nicht näher dargestellten Variante auch so angeordnet sein, dass das Bindegut 12A nicht nach unten, sondern zur Fixierung nach oben, in Richtung auf die Zentrierhilfe 14 gedrückt wird. Der Unterstützungshebel 22 ist jedoch auf die Ausführungsart nicht eingeschränkt.

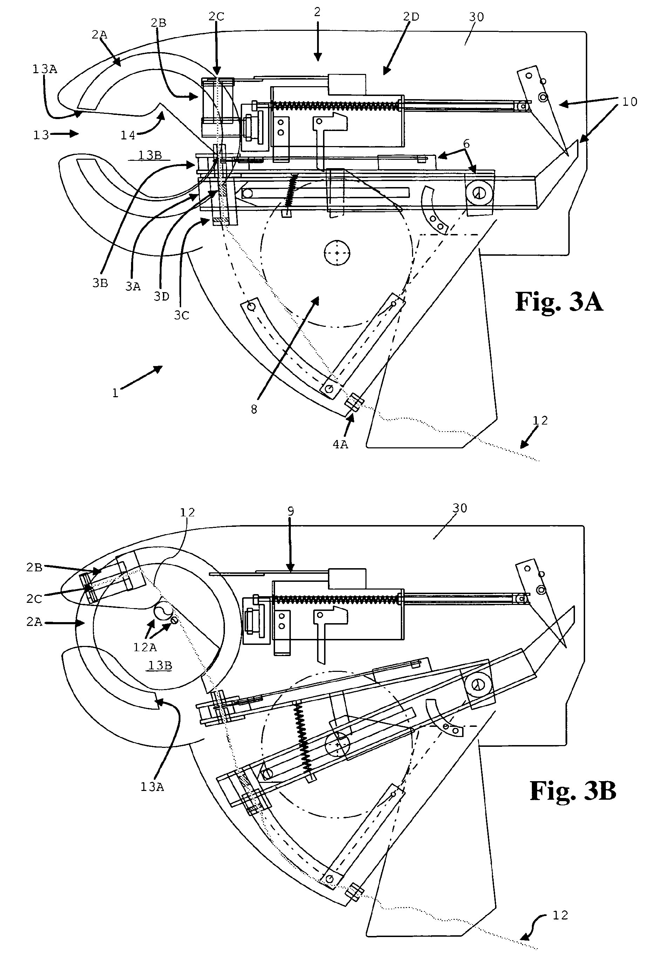

Die Figuren 3A-3D zeigen eine Darstellung der portablen Bindemaschine in einer ersten Variante mit einzelnen Abläufen zur Durchführung einer Umwindung mit anschließender Verknotung.

Die Figur 3A zeigt den automatischen Ladevorgang der portablen Bindemaschine 1 mit Bindematerial 12. Die portable Bindemaschine 1 wurde zur Durchführung eines ersten automatischen Ladevorganges durch erstmaliges Zuführen von Bindematerial 12 per Hand über den nachfolgend beschriebenen Ladevorgang vorgeladen. Hierbei wird das Bindematerial 12 bei erstmaliger Ladung entlang einer Führungshülse 4A über die Trägervorrichtung 3A bis zur Aufnahmevorrichtung 3B eingezogen. Durch die Konzeption der Trägervorrichtung 3A wird das Bindematerial 12 über die Klemmvorrichtung 3C und der Rückzugsicherung 3D befestigt.

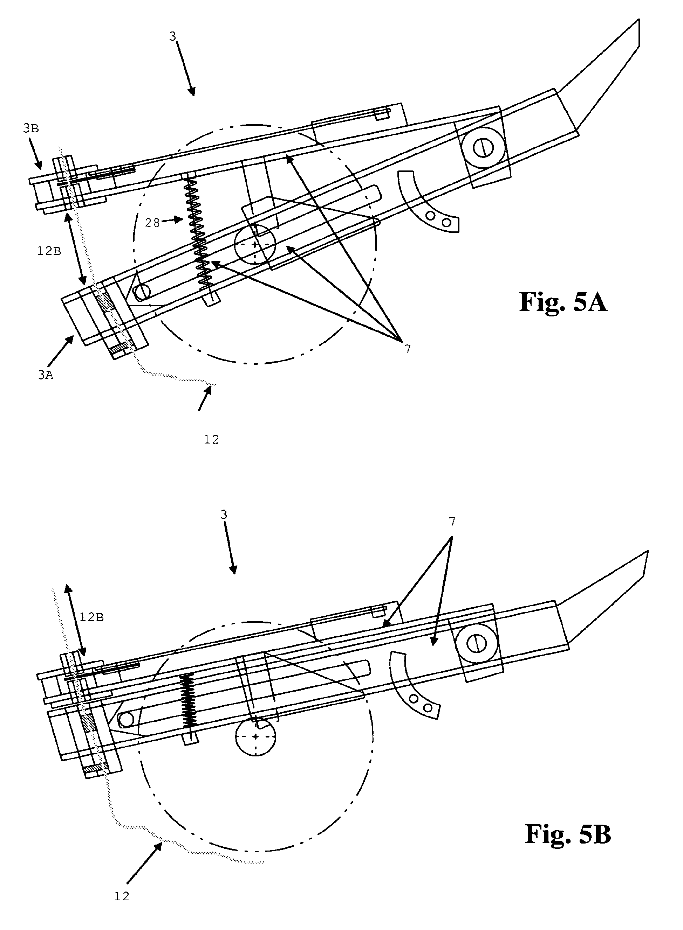

Beim automatischen Ladevorgang wird die mit Bindematerial 12 vorgeladene Trägervorrichtung 3A über den automatischen Antrieb 8 und die Führungselemente 7 in einer kreisförmigen Bewegung zum Wickelkopf 2B bewegt. Durch die Konzeption der Bindemaschine 1 wird die in der vorliegenden Variante ausgeführte Aufnahmevorrichtung 3B automatisch durch die kreisförmige Bewegung mit betätigt. Durch das Aufeinandertreffen der Trägervorrichtung 3A mit der Aufnahmevorrichtung 3B wird das Bindematerial 12 zur Klemmvorrichtung 2C, welche in der vorliegenden Variante am Wickelkopf 2B ausgeführt ist, transportiert und eingeklemmt. Das Öffnen und Schließen der Klemmvorrichtung 2C erfolgt durch die automatische Betätigung des Klemm- und Öffnungsmechanismus 2D, 2E. Die zum Einklemmen nötige Länge des Bindematerials 12 ist durch den Abstand der Trägervorrichtung 3A zur Aufnahmevorrichtung 3B definiert, welche in der vorliegenden Ausführungsvariante als Einklemmweglänge 12B (siehe hierzu Figuren 5A und 5B) bezeichnet wurde. Nach Durchführung des Ladevorganges ist die portable Bindemaschine 1 für eine Umwindung mit anschließender Verknotung einsatzbereit.

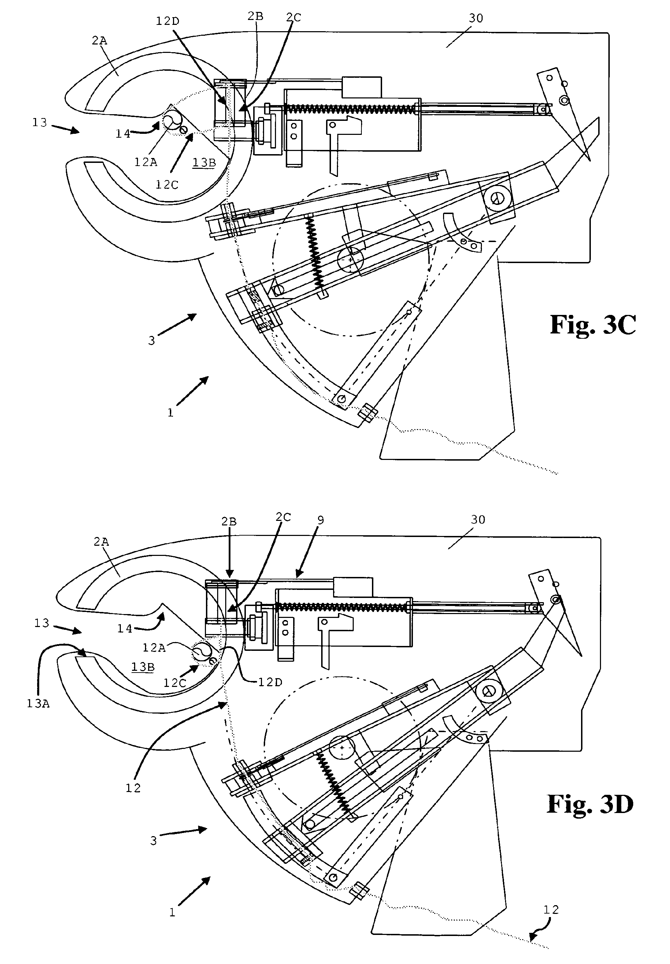

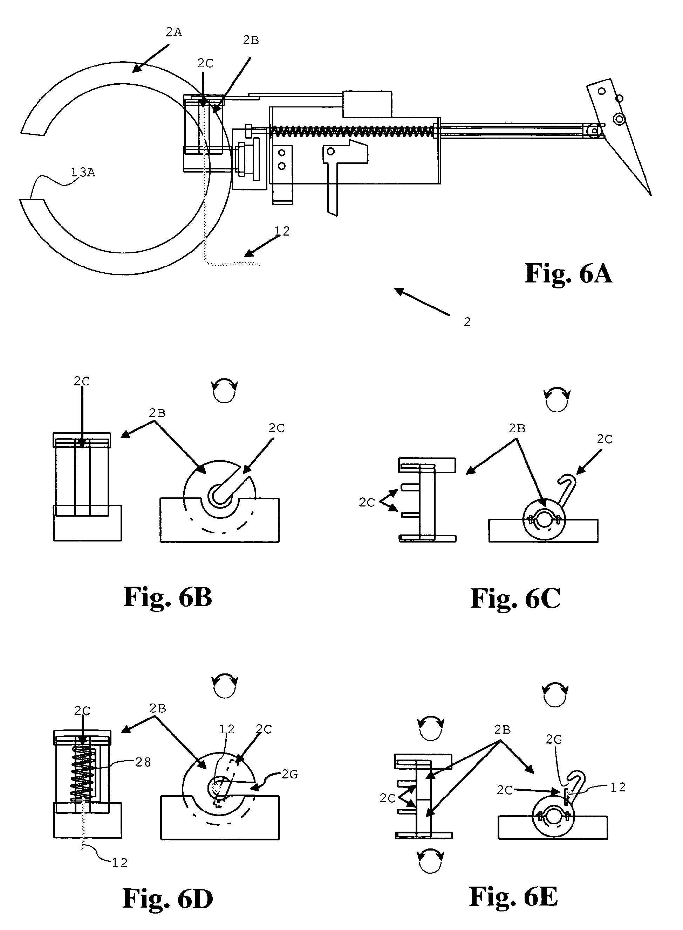

Die Figur 3B zeigt eine Darstellung der portablen Bindemaschine 1 in einer ersten Variante in der Durchführung einer Primärumwindung 12C um das Bindegut 12A.
Nachdem das Bindegut 12A in den Bindegutraum 13B eingeführt und über die Zentrierhilfe 14 zentriert wurde, erfolgt nach Betätigung des Startschalters 16 der Bindemaschine 1 die automatische Primärumwindung 12C des Bindeguts 12A. Das Bindematerial 12 wird hierzu, eingeklemmt über die Klemmvorrichtung 2C, durch die kreisförmige Bewegung der sichelartigen Scheibe 2A um das Bindegut 12A transportiert, wobei der auf der sichelartigen Scheibe 2A angeordnete Wickelkopf 2B das zur Vollendung der Umrundung weitergeführte Bindematerial 12 mit der Wickelkopföffnung 2G (beispielhaft dargestellt in Figur 6D) erfasst. Nach vollständiger Umrundung des Bindeguts 12A ist der Primärumwindungsvorgang wie in Figur 3C dargestellt beendet.

Anschließend erfolgt wie in Figur 3C dargestellt die automatische Verknotung durch Umwinden der Primärumwindung 12C mit zumindest einer Sekundärumwindung 12D durch den um seine Achse rotierbaren Wickelkopf 2B. Hierbei wird die Primärumwindung 12C durch die Rotation des Wickelkopfes 2B zumindest einmal in Form einer Sekundärumwindung 12D umrundet. Die zumindest eine Schlupfsicherung 9 wird zeitgleich mit der Durchführung der Sekundärumwindung 12D betätigt und verhindert ein Entgleiten des Bindematerials 12 während der Rotation des Wickelkopfes 2B.

In einer in dieser Figur nicht näher dargestellten Variante, kann auch eine zweite Schlupfsicherung 9 vorgesehen sein, welche auf der zweiten Seite des Wickelkopfes 2B eingreift und entweder zeitgleich mit der Schlupfsicherung 9 gekoppelt oder auch unabhängig von dieser betätigt werden kann.

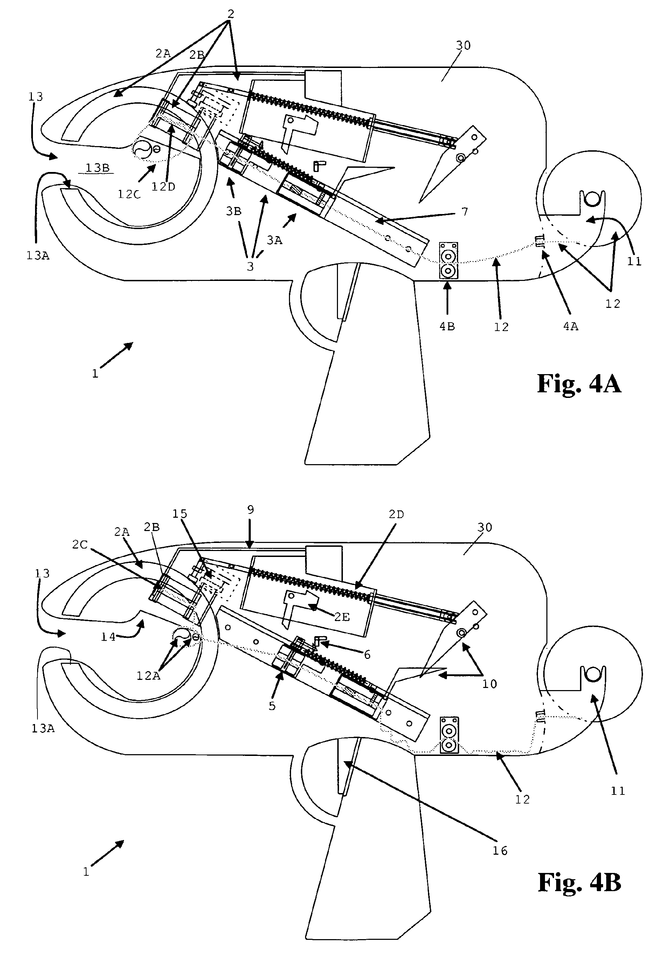

Die Figur 3D zeigt eine Darstellung zur Verknotung des Bindeguts 12A in einer ersten Variante. Hierbei wird nach erfolgter Sekundärumwindung 12D das Bindematerial 12 durch die kreisförmige Nachladebewegung der Ladevorrichtung 3 nach unten gezogen. In Folge dieses Verzurrvorganges wird durch die entstehende Druckausübung über das Bindematerial 12 sowie durch Mithilfe des Unterstützungshebels 22 das Bindegut 12A entlang der dafür vorgesehenen Gleitschiene der Bindegutraumöffnung 13 in den unteren Bereich bis zum Anschlag gezogen. Nach Erhalt einer durch die Konzeption definierten Verzurrstärke wird die Abtrennvorrichtung 5 über Abtrennauslöser 6 (siehe Figur 4B) aktiviert und das Bindematerial 12 durchtrennt. Nach erfolgter Durchtrennung ist der Umwindungs- und Verknotungsvorgang vollständig beendet und das Bindegut 12A kann, unterstützt durch die Freigabevorrichtung 22B, entnommen werden. Im Anschluss wird die Ladevorrichtung 3 wie in Figur 3A dargestellt zur erneuten Ladung zur Klemmvorrichtung 2C bewegt. Somit ist die Bindemaschine 1 für einen neuen Umwindungs- und Verknotungsvorgang bereit. Zur Entwirrung des nachgeladenen Bindematerials 12, verursacht durch die Rotation des Wickelkopfes 2B im Zuge der Sekundärumwindung 12D, kann nach einer durchgeführten erneuten Ladung der Wickelkopf 2B in entgegen gesetzter Richtung rotieren.

Die Figuren 4A-4B zeigen eine Darstellung der portablen Bindemaschine 1 in einer zweiten Variante mit einzelnen Abläufen zur Durchführung einer Umwindung mit anschließender Verknotung.

Die Figur 4A zeigt eine Darstellung der portablen Bindemaschine 1 in einer zweiten Variante. Die Konzeption der Bindemaschine 1 unterscheidet sich im Wesentlichen von der ersten Variante darin, dass die Anordnung der einzelnen Elemente, wie beschrieben, an einer anderen Stelle ausgeführt ist, diese teilweise anders konzipiert wurden und dass die portable Bindemaschine 1 eine Bindematerial-Haltevorrichtung 11 aufweist, welche jedoch nicht zwingend erforderlich ist. Die Ladevorrichtung 3 mit der dazugehörigen Trägervorrichtung 3A und der Aufnahmevorrichtung 3B wurden, wie in der ersten Ausführungsvariante beschrieben ist, auf nur einem Führungselement 7 ausgeführt. Der in der Darstellung nicht näher dargestellte Antrieb der Ladevorrichtung 3 kann z.B. mittels eines Spindelhubgetriebes, einer Schneckenwelle oder auch eines Ketten- und/oder Seilantriebs oder ähnlich erfolgen. Analog der Beschreibung in Figur 3A wurde die portable Bindemaschine 1 durch erstmaliges Zuführen von Bindematerial 12 per Hand über den nachfolgend beschriebenen Ladevorgang vorgeladen. Hierbei wird das Bindematerial 12 bei erstmaliger Ladung entlang der Führungshülse 4A und Führungsrollen 4B über die Trägervorrichtung 3A bis zur Aufnahmevorrichtung 3B eingezogen, wobei die Führungsrollen 4B in einer nicht dargestellten Variante z.B. auch über entsprechende Steuerungen angetrieben werden können, um das Bindematerial 12 im Zuge der Nachladebewegung zurückziehen zu können. Ferner können die Führungsrollen 4B auch an einer beliebig anderen Stelle angeordnet werden. Durch die Konzeption der Trägervorrichtung 3A wird das Bindematerial 12 über die Klemmvorrichtung 3C und die Rückzugsicherung 3D befestigt. Der automatische Ladevorgang der Bindemaschine 1 erfolgt analog der Beschreibung zu Figur 3A, durch Aufeinandertreffen der Trägervorrichtung 3A und der Aufnahmevorrichtung 3B, mit dem wesentlichen Unterschied, dass dies im vorliegenden Ausführungsbeispiel nicht wie in Figur 3A beschrieben in einer kreisförmigen Bewegung, sondern in einer linearen Bewegung durch Entlangführen der beiden Vorrichtungen 3A, 3B an einem Führungselement 7 erfolgt.

Durch die Konzeption der Bindemaschine 1 in der zweiten Variante ergeben sich wesentliche Vorteile im Bezug auf Stabilität und Gesamtmaße der portablen Bindemaschine 1. Ferner kann auch das auf einer Rolle aufgewickelte Bindematerial 12 direkt an der Bindemaschine 1 an der dafür vorgesehenen Bindematerial-Halterung 11 angebracht werden.

Der Ablauf zur Durchführung einer Primärumwindung 12C um das Bindegut 12 erfolgt analog der Beschreibung zu Figur 3B.

Die vorliegende Darstellung in Figur 4A zeigt den Ablauf der portablen Bindemaschine 1 zur automatischen Verknotung durch Umwinden der Primärumwindung 12C mit zumindest einer Sekundärumwindung 12D durch den Wickelkopf 2B. Hierbei wird die Primärumwindung 12C durch die Rotation des Wickelkopfes 2B zumindest einmal in Form einer Sekundärumwindung 12D umrundet.

Die Figur 4B zeigt den Verknotungsvorgang der portablen Bindemaschine 1 nach erfolgter Sekundärumwindung 12D. Hierbei wird die Ladevorrichtung 3 im Zuge des erneuten Ladevorganges entlang des Führungselementes 7 nach unten bewegt. Durch diese Bewegung wird über das Bindematerial 12 Druck auf das Bindegut 12A ausgeübt, welches durch zusätzliche Mithilfe über den Unterstützungshebel 22 entlang der dafür vorgesehen Gleitschiene des Bindegutraumes 13B bis zum Anschlag geführt wird. Nach einer definierten Verzurrstärke erfolgt, analog der Bindemaschine 1 in einer ersten Variante, das Durchtrennen des Bindematerials 12 über die Abtrennvorrichtung 5, welche im vorliegenden Beispiel direkt an der Aufnahmevorrichtung 3B ausgeführt wurde. Diese kann auch an einer anderen, in den Figuren nicht näher dargestellten Stelle ausgeführt werden.

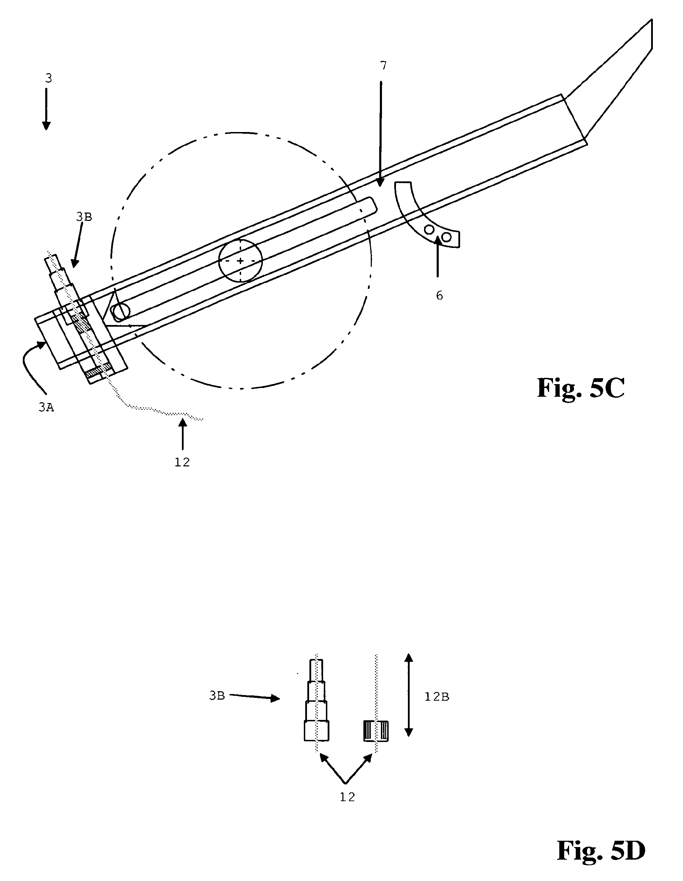

Die Betätigung der Abtrennvorrichtung 5 erfolgt über den Abtrennauslöser 6. Die zur Freigabe des Bindeguts 12A nötige Betätigung der Klemmvorrichtung 2C erfolgt über die Auslösehebel 10 und dem Klemm- und Öffnungsmechanismus 2D, 2E. Sowohl die Betätigung der Abtrennvorrichtung 5 als auch die Betätigung des Klemm- und Öffnungsmechanismus 2D, 2E kann über eine elektronische Steuerung erfolgen und/oder auch an einer beliebig anderen Stelle ausgeführt sein und/oder auch teilweise oder zur Gänze entfallen. Ferner kann auch die Klemmvorrichtung 2C, an der sichelartigen Scheibe 2A ausgeführt sein, was in Figuren nicht näher dargestellt ist. Je nach Ausführungsvariante kann die Aufnahmevorrichtung 3B wie in Figur 5C dargestellt auch direkt an der Trägervorrichtung 3A ausgeführt sein.

Je nach Ausführungsvariante kann die Betätigung der Klemmvorrichtungen 2C, 3C sowie die Betätigung der Rückzugsicherung 3D auch über eine elektronische Steuerung, z.B. über Magnetschalter, erfolgen.

Die Figuren 5A-5G zeigen Komponenten einer portablen Bindemaschine 1.

Die Figur 5A zeigt eine Darstellung der Ladevorrichtung 3 in einer ersten Variante. Sowohl die Trägervorrichtung 3A als auch die Aufnahmevorrichtung 3B sind im vorliegenden Ausführungsbeispiel jeweils an hebelartigen Führungselementen 7 ausgeführt. Hierbei werden im Zuge eines Ladevorganges, die gesamten hebelartigen Führungselemente 7 kreisförmig bewegt. Die als Führungselement dargestellte Feder 7 dient nach erfolgter Ladung der Bindemaschine 1 der automatischen Rückführung der Trägervorrichtung 3A zur Einhaltung des Einklemmweges bzw. Einklemmlänge 12B.

Die Figur 5B zeigt die Ladevorrichtung 3 im Zuge eines Ladevorganges. Hierbei wurde durch die kreisförmige Bewegung der Ladevorrichtung 3, die Trägervorrichtung 3A an die Aufnahmevorrichtung 3B gedrückt. Die zum Einklemmen nötige Länge des Bindematerials 12, die Einklemmweglänge 12B, definiert durch den Abstand der Trägervorrichtung 3A zur Aufnahmevorrichtung 3B wird somit freigegeben.

Die Figur 5C zeigt eine weitere Darstellung einer Ladevorrichtung 3. Sowohl die Trägervorrichtung 3A als auch die Aufnahmevorrichtung 3B sind an ein und demselben hebelartigen Führungselement 7 ausgeführt. Die Aufnahmevorrichtung 3B ist in der vorliegenden Ausführung direkt an der Trägervorrichtung 3A ausgeführt.

Die Figur 5D zeigt eine Darstellung einer weiteren Variante der Aufnahmevorrichtung 3B. Diese ist teleskopartig ausgeführt. Die zum Einklemmen an der Umwindungsvorrichtung 2 nötige Einklemmweglänge 12B des Bindematerials 12 wird hierbei durch Druckausübung, herbeigeführt durch beispielsweise Anpressen der Aufnahmevorrichtung 3B an die Klemmvorrichtung 2C, wobei die teleskopartigen Elemente ineinander verschoben werden, freigegeben.

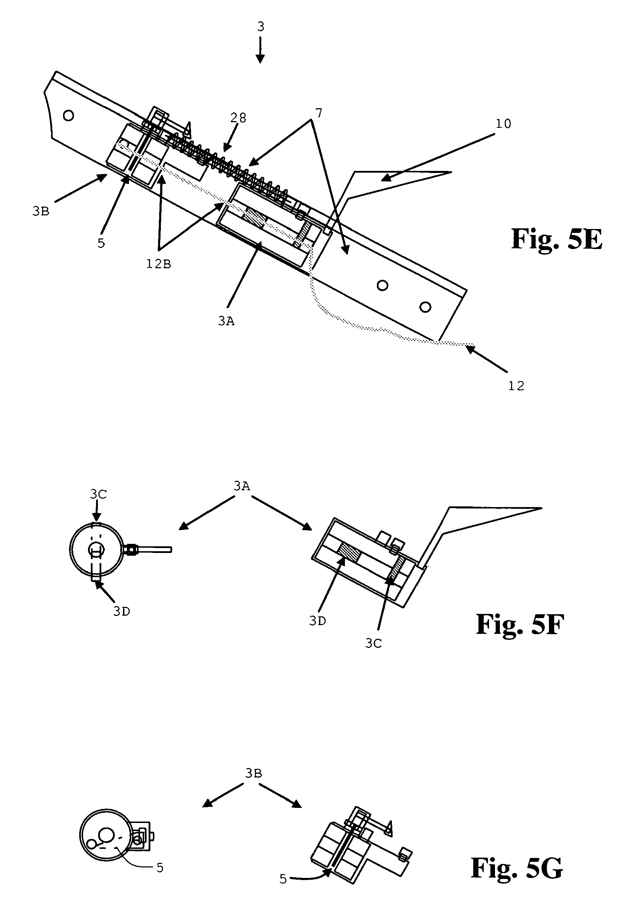

Die Figur 5E zeigt eine weitere Ausführungsvariante der Ladevorrichtung 3. Hierbei sind sowohl die Trägervorrichtung 3A als auch die Aufnahmevorrichtung 3B an nur einem Führungselement 7 ausgeführt. Das Führungselement 7 ist anders als in Figur 5C dargestellt nicht hebelartig, sondern als eine Art Führungsschiene ausgeführt. Bei diesem Ausführungsbeispiel ist das Führungselement 7 starr an der Bindemaschine 1 befestigt. Die Trägervorrichtung 3A und die Aufnahmevorrichtung 3B werden durch einen Antrieb linear entlang des Führungselementes bewegt. Der Antrieb der Ladevorrichtung 3 kann beispielsweise über ein Spindelhubgetriebe, einer Schneckenwelle und /oder über einen Ketten- und/oder Seilantrieb oder ähnliches erfolgen. Ferner kann auch die Aufnahmevorrichtung 3B, analog der Darstellung in Figur 5C, direkt an der Trägervorrichtung 3A ausgeführt sein.

Die Figur 5F zeigt eine detaillierte Darstellung der Trägervorrichtung 3A der Ladevorrichtung 3 der in Figur 5E beschriebenen Ausführungsvariante. Die Trägervorrichtung 3A weist demnach eine Klemmvorrichtung 3C und eine Rückzugsicherung 3D auf. Die Ausführung der Trägervorrichtung 3A ist auf die dargestellte Variante jedoch nicht eingeschränkt.

Die Figur 5G zeigt eine detaillierte Darstellung der Aufnahmevorrichtung 3B der Ladevorrichtung 3 analog der Darstellung in Figur 5E. Die Abtrennvorrichtung 5 wurde hierbei direkt an der Aufnahmevorrichtung 3B ausgeführt. Diese kann auch an einer beliebig anderen Stelle der Bindemaschine 1 ausgeführt sein. Die Ausführung der Aufnahmevorrichtung 3B ist auf die dargestellte Variante jedoch nicht eingeschränkt.

Die Figuren 6A-6E zeigen Komponenten einer portablen Bindemaschine 1.

Die Figur 6A zeigt eine Umwindungsvorrichtung 2 einer Bindemaschine 1 in einer ersten Variante. Die Klemmvorrichtung 2C wurde direkt am rotierbaren Wickelkopf 2B ausgeführt. Der rotierbare Wickelkopf 2B wurde, analog den Darstellungen der Figuren 1-4B, direkt an der sichelartigen Scheibe 2A ausgeführt. Bei Durchführung einer Primärumwindung 12C um das Bindegut 12A werden bei dieser ersten Variante sowohl die Klemmvorrichtung 2C als auch der Wickelkopf 2B in einer kreisförmigen Bewegung durch die sichelartige Scheibe 2A um das Bindegut 12A bewegt. Die sichelartige Scheibe 2A wurde in der vorliegenden Variante als eine kreisförmige Scheibe mit einer Scheibenöffnung 13A ausgeführt. Die sichelartige Scheibe 2A kann auch ellipsenförmig oder oval ausgeführt sein.

Die Figuren 6B-6E zeigen erste beispielhafte Varianten eines um seine eigene Achse rotierbaren Wickelkopfes 2B. Die Ausführung ist jedoch nicht auf die dargestellten Varianten eingeschränkt.

Die Figur 6B zeigt eine Darstellung eines Wickelkopfes 2B in einer ersten Variante. Der Wickelkopf 2B besteht hierbei im Wesentlichen aus zwei miteinander verbundenen Scheiben, wobei der Abstand der Scheiben zueinander variabel ausgeführt werden kann. Die Klemmvorrichtung 2C bildet eine Ausnehmung an den beiden Scheiben. Durch Rotation des Wickelkopfes 2B wird das Bindematerial 12 in den Ausnehmungen und der Befestigung des Wickelkopfes 2B eingeklemmt, wodurch eine Klemmvorrichtung 2C entsteht. In einer weiteren Variante kann der Wickelkopf 2B auch Zahnradartig ausgeführt sein.

Die Figur 6C zeigt eine weitere Variante des Wickelkopfes 2B. Hierbei bilden wiederum zwei miteinander verbundene Scheiben den Wickelkopf 2B. Am Wickelkopf 2B angebrachte hackenförmigen Elemente bilden die Klemmvorrichtung 2C. Das Bindematerial wird im Zuge einer Rotation von der Klemmvorrichtung 2C erfasst und bewegt. Der Wickelkopf kann zumindest eine Klemmvorrichtung 2C aufweisen.

Die Figur 6D zeigt eine weitere, in den Figuren 1-4B dargestellte Variante. Hierbei bilden wiederum zwei miteinander verbundene Scheiben den Wickelkopf 2B, wobei dieser eine Klemmvorrichtung 2C, welche über ein Spannelement 28 vorgespannt ist, sowie eine Wickelkopföffnung 2G aufweist und in beide Richtungen um seine eigene Achse rotierbar ist. Der Wickelkopf 2B kann in einer weiteren nicht dargestellten Variante auch nur aus einer Scheibe bestehen. In einer weiteren Variante kann dieser auch zahnradförmig ausgeführt sein. In einer weiteren nicht dargestellten Variante, kann der rotierbare Wickelkopf 2B auch zusätzlich vertikal und horizontal verschiebbar ausgeführt sein.

Die Figur 6E zeigt einen um seine eigene Achse rotierbaren Wickelkopf 2B, welcher aus zwei unabhängig voneinander, in beide Richtungen rotierbaren Elementen besteht, und eine Klemmvorrichtung 2C sowie eine Wickelkopföffnung 2G aufweist. In einer weiteren, in den Zeichnungen nicht dargestellten Variante, kann der Wickelkopf 2B auch nur als ein rotierbares, hackenförmiges Element ausgeführt sein.

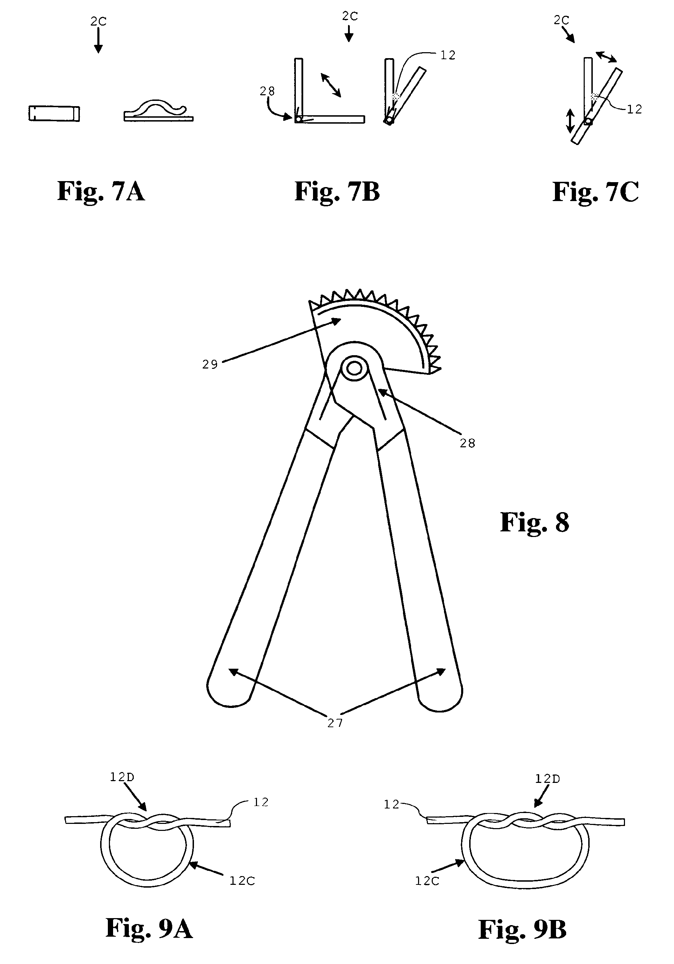

Die Figuren 7A-7C zeigen erste Varianten einer Klemmvorrichtung 2C. Diese ist jedoch nicht auf die angeführten Beispiele eingeschränkt. Zudem kann die Klemmvorrichtung 2C sowohl am Wickelkopf 2B als auch an der sichelartigen Scheibe 2A ausgeführt sein. Auch die Klemmvorrichtung 3C und die Rückzugsicherung 3D können bei den dargestellten Beispielen/Varianten der portablen Bindemaschine 1, in beliebigen, nicht näher beschriebenen Varianten ausgeführt sein.

Die Figur 7A zeigt eine Klemmvorrichtung 2C in einer ersten Variante.

Die Figur 7B zeigt eine Klemmvorrichtung 2C in einer zweiten Variante. Hierbei wird das Bindematerial 12 mittels Druckbeaufschlagung durch das zueinander Bewegen zweier Klemmelemente, verstärkt durch ein Spannelement 28, geklemmt .

Die Figur 7C zeigt eine Klemmvorrichtung 2C in einer dritten Variante. Hierbei werden die beiden Klemmelemente durch eine Hebelwirkung aufeinander zu bewegt, wodurch das Bindematerial 12 geklemmt wird.

Die Figur 8 zeigt einen Antrieb in einer ersten Variante. Zwei Griffe 27 bilden ein Art Zangengriff. Durch das Annähern der beiden Griffe 27 zueinander, beispielsweise durch Kraftausübung mit einer Hand auf die einzelnen Griffe 27, wird der mit einem Griff verbundene halbkreisförmige und als Zahnrad ausgeführte Antrieb 29 bewegt. Die Bewegung des Antriebes 29 kann bei einer entsprechenden Konzeption der portablen Bindemaschine 1 über entsprechende Übersetzungen und Getriebe als Antrieb für die einzelnen Elemente und Komponenten vorgesehen werden. Zur automatischen Rückstellung der beiden Griffe 27 in die Grundstellung kann ein Spannelement (28) vorgesehen werden. Die Ausführungsvarianten eines Antriebes in einer ersten Variante sind jedoch auf die Darstellung in Figur 8 nicht begrenzt.

Die Figur 9A zeigt ein Beispiel für eine mögliche Knotengrundform, wobei die Primärumwindung 12C einmal in Form einer Sekundärumwindung 12D umrundet wurde.

Die Figur 9B zeigt ein Beispiel für eine mögliche Knotengrundform, wobei die Primärumwindung 12C zweimal in Form einer Sekundärumwindung 12D umrundet wurde.

Die Knotenformierung ist auf die angeführten Grundformen nicht eingeschränkt und lässt sich auf beliebig viele Umrundungen und/oder Varianten erweitern.

Die vorliegende Erfindung sei nicht auf die vorstehenden Ausführungsbeispiele beschränkt, sondern lässt sich auf beliebige Art und Weise modifizieren, ohne vom Gegenstand der vorliegenden Erfindung abzuweichen.

### Bezugszeichenliste

- 1: portable Bindemaschine
- 2: Umwindungsvorrichtung
- 2A: sichelartige Scheibe
- 2B: Wickelkopf
- 2C: Klemmvorrichtung
- 2D: Klemm- und Öffnungsmechanismus
- 2E: Klemm- und Öffnungsmechanismus
- 2F: Ladevorrichtungsstopper
- 2G: Wickelkopföffnung
- 3: Ladevorrichtung
- 3A: Trägervorrichtung
- 3B: Aufnahmevorrichtung
- 3C: Klemmvorrichtung
- 3D: Rückzugsicherung
- 4A: Führungshülse
- 4B: Führungsrollen
- 5: Abtrennvorrichtung
- 6: Abtrennauslöser
- 7: Führungselemente
- 8: Antriebskurbel
- 9: Schlupfsicherung
- 10: Auslösehebel
- 11: Bindematerial-Haltevorrichtung
- 12: Bindematerial
- 12A: Bindegut
- 12B: Einklemmweglänge
- 12C: Primärumwindung
- 12D: Sekundärumwindung
- 13: Bindegutraumöffnung
- 13A: Scheibenöffnung
- 13B: Bindegutraum
- 14: Zentrierhilfe
- 15: Übersetzung/Getriebe
- 16: Startschalter
- 17: Motor
- 18: Motor
- 19: Motor
- 20: Antriebswelle
- 21: Übersetzung/Getriebe
- 22: Unterstützungshebel
- 22A: Auslösehebel
- 22B: Freigabevorrichtung
- 23: Antriebswelle
- 24: Übersetzung/Getriebe
- 25: Steuereinheit
- 26: Laufrad
- 27: Zangengriff
- 28: Spannelement
- 29: Antrieb
- 30: Grundkörper

## Patentansprüche

1. Portable Bindemaschine (1) zur Herstellung zumindest einer Umwindung (12C) aus einem Bindematerial (12) von Bindegut (12A) mit anschließender Verknotung der zumindest einen Umwindung (12C) durch Umschlingen der zumindest einen Umwindung (12C) mit dem Bindematerial (12),
mit einem Grundkörper (30), welcher einen Bindegutraum (13B) aufweist, der eine Bindegutraumöffnung (13) aufweist,
mit wenigstens einer Umwindungsvorrichtung (2), enthaltend:
- zumindest eine sichelartige Scheibe (2A), welche an dem Grundkörper (30) über dem Bindegutraum (13B) verdrehbar angebracht ist,
- zumindest eine Klemmvorrichtung (2C) zur Klemmung des Bindematerials (12), wobei die zumindest eine Klemmvorrichtung (2C) auf der sichelartigen Scheibe (2A) angebracht ist,
- zumindest einen Wickelkopf (2B), der um seine eigene Achse rotierbar ist und der an der sichelartigen Scheibe (2A) angeordnet ist.

2. Bindemaschine nach Anspruch 1,
**dadurch gekennzeichnet,**
**dass** die zumindest eine Klemmvorrichtung (2C) am wenigstens einen Wickelkopf (2B) angeordnet ist.

3. Bindemaschine nach zumindest einem der vorhergehenden Ansprüche,
**dadurch gekennzeichnet,**
**dass** die Bindemaschine (1) wenigstens eine Schlupfsicherung (9) aufweist und/oder wenigstens eine Abtrennvorrichtung (5) aufweist.

4. Bindemaschine nach zumindest einem der vorhergehenden Ansprüche,
**dadurch gekennzeichnet,**
**dass** eine Ladevorrichtung (3) vorgesehen ist, die wenigstens eine Trägervorrichtung (3A) und wenigstens eine Aufnahmevorrichtung (3B) zur kontrollierten Zufuhr und zum Weitertransport des Bindematerials (12) aufweist.

5. Bindemaschine nach Anspruch 4,
**dadurch gekennzeichnet,**
**dass** die Ladevorrichtung (3) mit wenigstens einer weiteren Klemmvorrichtung (3C) ausgebildet ist und/oder mit wenigstens einer Rückzugsicherung (3D) ausgebildet ist und/oder wenigstens eine Abtrennvorrichtung (5) aufweist.

6. Bindemaschine nach zumindest einem der vorhergehenden Ansprüche,
**dadurch gekennzeichnet,**
**dass** die sichelartige Scheibe (2A) eine Scheibenöffnung (13A) aufweist, deren Öffnungsweite im Wesentlichen einer Öffnungsweite der Bindegutraumöffnung (13) entspricht.

7. Bindemaschine nach wenigstens einem der Ansprüche 4 bis 6,
**dadurch gekennzeichnet,**
**dass** die wenigstens eine Trägervorrichtung (3A) und die wenigstens eine Aufnahmevorrichtung (3B) am Grundkörper (30) gegeneinander verschwenkbar angeordnet sind.

8. Bindemaschine nach wenigstens einem der Ansprüche 4 bis 7,
**dadurch gekennzeichnet,**
**dass** die wenigstens eine Umwindungsvorrichtung (2) und die Ladevorrichtung (3) gekoppelt sind.

9. Bindemaschine nach Anspruch 8,
**dadurch gekennzeichnet,**
**dass** die wenigstens eine Umwindungsvorrichtung (2) und die Ladevorrichtung (3) über wenigstens einen Auslösehebel (10) gekoppelt sind.

10. Bindemaschine nach zumindest einem der vorhergehenden Ansprüche,
**dadurch gekennzeichnet,**
**dass** der Bindegutraum (13B) eine Zentrierhilfe (14) aufweist.

11. Bindemaschine nach zumindest einem der vorhergehenden Ansprüche,
**dadurch gekennzeichnet,**
**dass** die Bindemaschine (1) wenigstens einen Unterstützungshebel (22) aufweist.

12. Bindemaschine nach zumindest einem der vorhergehenden Ansprüche,
**dadurch gekennzeichnet,**
**dass** die Bindemaschine (1) wenigstens eine Freigabevorrichtung (22B) aufweist.

13. Bindemaschine nach zumindest einem der vorhergehenden Ansprüche,
**dadurch gekennzeichnet,**
**dass** der wenigstens eine Wickelkopf (2B) verschiebbar angeordnet ist.

14. Verfahren zum Herstellen zumindest einer Umwindung (12C) aus einem Bindematerial (12) von Bindegut (12A) mit anschließender Verknotung der zumindest einen Umwindung (12C) durch Umschlingen der zumindest einen Umwindung (12C) mit dem Bindematerial (12), insbesondere geeignet zur Durchführung auf einer portablen Bindemaschine (1) gemäß zumindest einem der Ansprüche 1 bis 13, umfassend die Schritte:
- Einbringen des Bindeguts (12A) in einen Bindegutraum (13B) und insbesondere Zentrieren des Bindeguts (12A) im Bindegutraum (13B);
- Klemmen des Bindematerials (12) mittels einer Klemmvorrichtung (12C);
- Erzeugen einer Primärumwindung (12C) des Bindematerials (12) um das Bindegut (12A) mittels einer kreisförmigen Bewegung der Klemmvorrichtung (12C) angeordnet auf einer sichelartigen Scheibe (2A), wobei die sichelartige Scheibe (2A) an einem Grundkörper (30) verdrehbar angebracht ist;
- Verknoten des Bindeguts (12A) durch Umwinden der Primärumwindung (12C) mit zumindest einer Sekundärumwindung (12D), wobei die Sekundärumwindung (12D) durch Rotation eines Wickelkopfes (2B) um seine eigene Achse, der an der sichelartigen Scheibe (2A) angeordnet ist, hergestellt wird.

15. Verfahren gemäß Anspruch 14, umfassend die Schritte: Verzurren des verknoteten Bindematerials (12) und insbesondere Abtrennen des verzurrten Bindematerials (12).

## Claims

1. Portable binding machine (1) for producing at least one loop (12C) of a binding material (12) around material to be bound (12A) with subsequent knotting of the at least one loop (12C) by looping the binding material (12) around the at least one loop (12C),
having a basic body (30) which has a chamber (13B) for the material to be bound, which has an opening (13) in the chamber for the material to be bound,
having at least one winding device (2) containing:
- at least one sickle-like disc (2A) which is rotatably mounted on the basic body (30) over the chamber (13B) for the material to be bound,
- at least one clamping device (2C) for clamping the binding material (12), wherein the at least one clamping device (2C) is mounted on the sickle-like disc (2A),
- at least one winding head (2B) which can be rotated about its own axis and which is disposed on the sickle-like disc (2A).

2. Binding machine as claimed in claim 1, **characterised in that** the at least one clamping device (2C) is disposed on the at least one winding head (2B).

3. Binding machine as claimed in at least one of the preceding claims, **characterised in that** the binding machine (1) has at least one anti-slip device (9) and/or at least one severing device (5).

4. Binding machine as claimed in at least one of the preceding claims, **characterised in that** a loading device (3) is provided which has at least one support device (3A) and at least one receiving device (3B) for controlled supply and for forward transportation of the binding material (12).

5. Binding machine as claimed in claim 4, **characterised in that** the loading device (3) is formed with at least one further clamping device (3C) and/or is formed with at least one anti-retraction device (3D) and/or has at least one severing device (5).

6. Binding machine as claimed in at least one of the preceding claims, **characterised in that** the sickle-like disc (2A) has a disc opening (13A), the opening width of which essentially corresponds to an opening width of the opening (13) in the chamber for the material to be bound.

7. Binding machine as claimed in at least one of claims 4 to 6, **characterised in that** the at least one support device (3A) and the at least one receiving device (3B) are disposed on the basic body (30) so as to be able to pivot with respect to each other.

8. Binding machine as claimed in at least one of claims 4 to 7, **characterised in that** the at least one winding device (2) and the loading device (3) are coupled.

9. Binding machine as claimed in claim 8, **characterised in that** the at least one winding device (2) and the loading device (3) are coupled via at least one actuating lever (10).

10. Binding machine as claimed in at least one of the preceding claims, **characterised in that** the chamber (13B) for the material to be bound has a centring aid (14).

11. Binding machine as claimed in at least one of the preceding claims, **characterised in that** the binding machine (1) has at least one assisting lever (22).

12. Binding machine as claimed in at least one of the preceding claims, **characterised in that** the binding machine (1) has at least one release device (22B).

13. Binding machine as claimed in at least one of the preceding claims, **characterised in that** the at least one winding head (2B) is displaceably disposed.

14. Method for producing at least one loop (12C) of a binding material (12) around material to be bound (12A) with subsequent knotting of the at least one loop (12C) by looping the binding material (12) around the at least one loop (12C), suitable in particular for carrying out on a portable binding machine (1) as claimed in at least one of claims 1 to 13, comprising the steps of:
- inserting the material to be bound (12A) into a chamber (13B) for the material to be bound and in particular centring the material to be bound (12A) in the chamber (13B) for the material to be bound;
- clamping the binding material (12) by means of a clamping device (12C);
- producing a primary loop (12C) of the binding material (12) around the material to be bound (12A) by means of a circular movement of the clamping device (12C) disposed on a sickle-like disc (2A), wherein the sickle-like disc (2A) is rotatably mounted on a basic body (30);
- knotting the material to be bound (12A) by winding at least one secondary loop (12D) around the primary loop (12C), wherein the secondary loop (12D) is produced by rotation of a winding head (2B) about its own axis, which winding head is disposed on the sickle-like disc (2A).

15. Method as claimed in claim 14, comprising the steps of: lashing the knotted binding material (12) and in particular severing the lashed binding material (12).

## Revendications

1. Machine à ligaturer portable (1) permettant de réaliser sur un objet à ligaturer (12A) au moins un enroulement (12C) de matériau pour ligature (12) et de nouer ensuite au moins un enroulement (12C) par enroulement de matériau pour ligature (12) autour de l'enroulement concerné (12C), avec un corps de base (30) définissant un espace pour objet à ligaturer (13B) pourvu d'une ouverture (13) d'espace pour objet à ligaturer,
avec au moins un dispositif d'enroulement (2) comprenant :
- au moins un disque en faucille (2A) monté rotatif sur le corps de base (30), au-dessus de l'espace pour objet à ligaturer (13B),
- au moins un dispositif de serrage (2C) servant à serrer le matériau pour ligature (12), au moins un dispositif de serrage (2C) étant monté sur le disque en faucille (2A),
- au moins une tête d'enroulement (2B) montée sur le disque en faucille (2A) et tournant sur son axe propre.

2. Machine à ligaturer selon la revendication 1, **caractérisée par le fait qu'**au moins un dispositif de serrage (2C) est monté au moins sur une tête d'enroulement (2B).

3. Machine à ligaturer selon au moins l'une des revendications précédentes, **caractérisée par le fait que** la machine à ligaturer (1) présente au moins une sécurité de dégagement (9) et/ou au moins un dispositif de séparation (5).

4. Machine à ligaturer selon au moins l'une des revendications précédentes, **caractérisée par le fait qu'**un dispositif de chargement (3) est prévu, qui présente au moins un dispositif de support (3A) et au moins un dispositif de réception (38) destinés à l'acheminement contrôlé et au transport ultérieur du matériau pour ligature (12).

5. Machine à ligaturer selon la revendication 4, **caractérisée par le fait que** le dispositif de chargement (3) est formé avec au moins un dispositif de serrage (3C) supplémentaire et/ou est formé au moins avec une sécurité de retrait (3D) et/ou présente au moins un dispositif de séparation (5).

6. Machine à ligaturer selon au moins l'une des revendications précédentes, **caractérisée par le fait que** le disque en faucille (2A) présente un orifice de disque (13A), dont la largeur d'orifice correspond essentiellement à une largeur d'orifice de l'ouverture d'espace pour objet à ligaturer (13).

7. Machine à ligaturer selon au moins l'une des revendications 4 à 6, **caractérisée par le fait qu'**au moins un dispositif de support (3A) et au moins un dispositif de réception (3B) sont disposés pivotants l'une contre l'autre sur le corps de base (30).

8. Machine à ligaturer selon au moins l'une des revendications 4 à 7, **caractérisée par le fait qu'**au moins un dispositif d'enroulement (2) et le dispositif de chargement (3) sont couplés.

9. Machine à ligaturer selon la revendication 8, **caractérisée par le fait qu'**au moins un dispositif d'enroulement (2) et le dispositif de chargement (3) sont couplés par l'intermédiaire d'au moins un levier de déclenchement (10).

10. Machine à ligaturer selon au moins l'une des revendications précédentes, **caractérisée par le fait que** l'espace pour objet à ligaturer (13B) présente un élément de centrage (14).

11. Machine à ligaturer selon au moins l'une des revendications précédentes, **caractérisée par le fait que** la machine à ligaturer (1) présente au moins un levier d'assistance (22).

12. Machine à ligaturer selon au moins l'une des revendications précédentes, **caractérisée par le fait que** la machine à ligaturer (1) présente au moins un dispositif de déclenchement (22B).

13. Machine à ligaturer selon au moins l'une des revendications précédentes, **caractérisée par le fait qu'**au moins une tête d'enroulement (2B) est disposée coulissante.

14. Procédé de réalisation permettant de réaliser sur un objet à ligaturer (12A) au moins un enroulement (12C) de matériau pour ligature (12) et de nouer ensuite au moins un enroulement (12C) par enroulement de matériau pour ligature (12) autour d'au moins un enroulement (12C), particulièrement adapté à la réalisation d'une machine à ligaturer (1) selon au moins une des revendications 1 à 13, comprenant les étapes suivantes :
- introduction de l'objet à ligaturer (12A) dans un espace pour objet à ligaturer (13B) et en particulier centrage de l'objet à ligaturer (12A) dans l'espace pour objet à ligaturer (13B) ;
- serrage du matériau pour ligature (12) à l'aide d'un dispositif de serrage (12C) ;
- génération d'un enroulement primaire (12C) du matériau pour ligature (12) autour de l'objet à ligaturer (12A) à l'aide d'un mouvement circulaire du dispositif de serrage (12C) disposé sur un disque en faucille (2A), le disque en faucille (2A) étant monté rotatif sur le corps de base (30) ;
- nouage du matériau pour ligature (12A) par enroulement de l'enroulement primaire (12C) avec au moins un enroulement secondaire (12D), l'enroulement secondaire (12D) étant fabriqué par rotation autour de son propre axe d'une tête d'enroulement (2B) disposée sur le disque en faucille (2A).

15. Procédé selon la revendication 14, comportant les étapes suivantes :
amarrage du matériau pour ligature noué (12) et en particulier séparation du matériau pour ligature amarré (12).
